# EUROPEAN PATENT SPECIFICATION

(11) **EP 3 136 201 B1**
(45) Date of publication and mention of the grant of the patent: **17.10.2018**
(21) Application number: 16184796.7
(22) Date of filing: 18.08.2016
(51) Int. Cl.: G06F 1/16, G06F 3/01, G06F 1/32, G06F 3/03

(54) **SCREEN CONTROL METHOD AND DEVICE, AND COMPUTER PROGRAM**
BILDSCHIRMSTEUERUNGSVERFAHREN UND VORRICHTUNG UND COMPUTERPROGRAMM
PROCÉDÉ ET DISPOSITIF DE COMMANDE D'ÉCRAN ET PROGRAMME INFORMATIQUE

(30) Priority: 31.08.2015 CN 201510547144
(43) Date of publication of application: 01.03.2017
(73) Proprietor: Xiaomi Inc., Beijing 100085 (CN)
(72) Inventor: GAO, Yi, Beijing, 100085 (CN); WANG, Hongqiang, Beijing, 100085 (CN); GE, Yunyuan, Beijing, 100085 (CN)
(74) Representative: Hughes, Andrea Michelle

(56) References cited:
- EP-A1- 2 824 541
- EP-A1- 2 846 318
- US-A1- 2009 195 497
- US-A1- 2011 264 928

## Description

### TECHNICAL FIELD

The present invention is related to the field of mobile communication technologies, and more particularly, to a screen control method and device, and a computer program.

### BACKGROUND

With the continuous development of technology, mobile phones as the symbols of mobile terminals have been widely used by users, and have become indispensable tools for the users in daily life.

When a mobile phone is in a standby mode, it is often necessary to power off the screen to save power, and when a user views or uses the mobile phone again, he or she needs to trigger a specific key on the mobile phone to start the screen up. Therefore, activation and deactivation of the screen is troublesome and misoperation may be caused.
Screen control methods are known from US2011/0264928, EP 2824541 and EP 2846318.

### SUMMARY

To overcome the above problems in the related arts, the present invention provides a screen control method and device, and a computer program in accordance with the appended claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a scene view provided according to an exemplary embodiment.
Fig. 2 is a flow chart showing a screen control method according to another exemplary embodiment.
Fig. 3 is a flow chart of step S210 in Fig. 2.
Fig. 4 is a scene view provided according to another exemplary embodiment.
Fig. 5 is a flow chart of step S220 in Fig. 2.
Fig. 6 is a flow chart showing a screen control method according to another exemplary embodiment.
Fig. 7 is a flow chart showing a screen control method according to another exemplary embodiment.
Fig. 8 is a scene view provided according to another exemplary embodiment.
Fig. 9 is a flow chart of step S730 in Fig. 7.
Fig. 10 is a structure diagram of a screen control device according to an exemplary embodiment.
Fig. 11 is a schematic drawing of a moving direction detecting unit in Fig. 10.
Fig. 12 is a schematic drawing of a screen orientation detecting unit in Fig. 10.
Fig. 13 is a structure diagram of a screen control device according to another exemplary embodiment.
Fig. 14 is a structure diagram of a screen control device according to another exemplary embodiment.
Fig. 15 is a schematic drawing of a judging unit in Fig. 14.
Fig. 16 is a structure diagram of a mobile terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

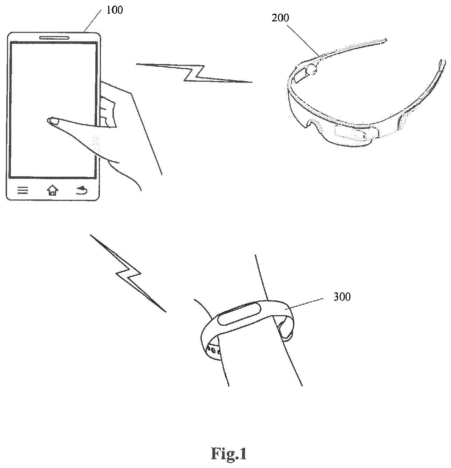

Fig. 1 is a scene view provided according to an exemplary embodiment. The Fig. 1 comprises a mobile phone 100, smart glasses 200 and a smart bracelet 300, wherein the mobile phone 100 may respectively communicate with the mobile phone 100 and the smart bracelet 300 through Bluetooth, a wireless network, and the like.

When a user holds and operates the mobile phone 100, if the mobile phone 100 moves, a gravity sensor in the mobile phone 100 can detect a gravity value of the mobile phone 100, and the mobile phone 100 can judge its moving direction according to the gravity value. In addition, the smart bracelet 300 is equipped with an acceleration sensor, and posture recognition information of the user can be recognized according to a value detected by the acceleration sensor, and is sent to the mobile phone 100, for example, the posture recognition information may include a user's palm orientation.

When the mobile phone 100 moves upward and the user's palm orientation is upward, the mobile phone 100 sends a screen recognition instruction to the smart glasses 200. When receiving the screen recognition instruction sent by the mobile phone 100, the smart glasses 200 start a screen recognition operation according to the screen recognition instruction to recognize whether a current visual field of the smart glasses 200 contains the mobile phone 100. If the current visual field of the smart glasses 200 contains the mobile phone 100, the smart glasses 200 send recognition success information to the mobile phone 100, and the mobile phone 100 powers on the mobile terminal screen according to the recognition success information sent by the smart glasses 200.

It should be noted that when the mobile phone 100 moves upward, and both the orientation of the mobile phone screen and the user's palm orientation are upward, it indicates that the user operates the mobile phone 100 to move toward the user's face, by which it can be pre-determined that the user intends to view the mobile phone to a large extent, but to more accurately determine whether the user needs to view the mobile phone, it is required to combine the screen recognition operation of the smart glasses 200, so that whether the user needs to view the mobile phone can be more accurately judged, and then the screen of the mobile phone 100 is powered on. Therefore, a problem that the mobile phone screen cannot be started until the user presses a specific key is solved, and great operation convenience is brought to the user.

When the mobile phone 100 moves downward, and both the orientation of the mobile phone screen and the user's palm orientation are downward, it indicates that the user need not view the mobile phone 100 anymore, and accordingly, the screen of the mobile phone 100 need not be powered on; if being powered on at the moment, the screen of the mobile phone 100 can be powered off directly.

It should be noted that 100 in Fig. 1 may also be a mobile device such as a tablet PC or the like, and 300 may also be a wearable wristband device such as a smart watch or the like.

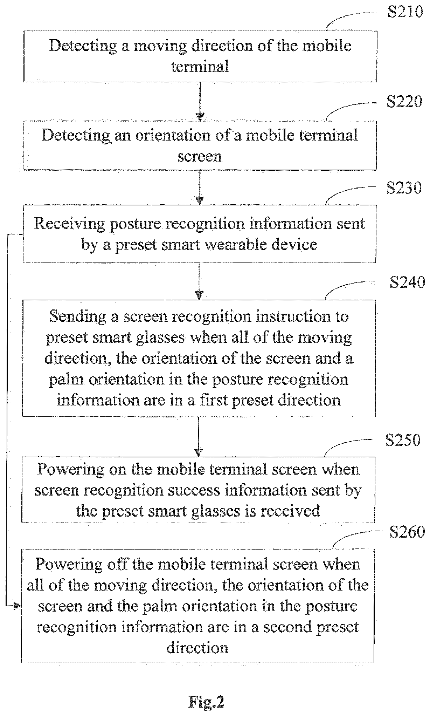

In order to illustrate the above performing flows in detail, the embodiment of the invention further provides a screen control method applied to a mobile terminal, as shown in Fig. 2, the method may comprise the steps as follows.

Step S210, detecting a moving direction of the mobile terminal.

The mobile terminal may be a portable device such as a mobile phone, a tablet PC, an e-book or the like which is frequently used by the user, and to facilitate understanding, the mobile phone, as the mobile terminal, is taken as an example to illustrate the embodiments.

Currently, a sensor for detecting the mobile phone moving direction is generally mounted in the user's mobile phone, such as an acceleration sensor. The mobile phone can easily recognize its moving direction according to parameter information detected by the sensor mounted therein.

Step S220, detecting an orientation of a mobile terminal screen.

The orientation of the mobile terminal screen can be classified into an upward direction and a downward direction, and likewise, whether the orientation of the mobile terminal screen is upward or downward can be judged through the parameter information detected by the acceleration sensor in the mobile phone. Illustratively, the orientation of the mobile terminal screen may be towards other directions, such as being leftward or rightward relative to the user. Although only the upward and downward directions are taken as examples for illustration, the embodiments provided by the present invention are not limited thereto.

Step S230, receiving posture recognition information sent by a preset smart wearable device.

The preset smart wearable device may be a currently-used smart bracelet, a smart watch or the like. In the embodiments, the smart watch is taken as an example for illustration. Generally, the smart watch is provided with an acceleration sensor, and can quickly and accurately recognize whether the wrist band part of the user rotates by acquiring parameter information detected by the acceleration sensor so as to judge the current orientation of the user's palm.

Step S240, sending a screen recognition instruction to preset smart glasses when all of the moving direction, the orientation of the screen and a palm orientation in the posture recognition information are in a first preset direction.

When it is detected that the moving direction of the mobile phone, the orientation of the screen and the user's palm orientation are in the first preset direction, for example, the first preset direction is towards the user's face, it indicates that the user intends to operate the mobile phone to view related information on the mobile phone screen, and at this time, to more accurately determine whether the user needs to view the mobile phone, it is required to send a screen reorganization instruction to the smart glasses so as to determine that whether a visual field of the smart glasses worn by the user contains an image characteristic of the mobile phone.

Step S250, powering on the mobile terminal screen when screen recognition success information sent by the preset smart glasses is received.

The screen recognition success information may include information that the smart glasses successfully detect the user's eyeballs are looking at information on the mobile phone, if the user's eyes are closed, or the user's eyeballs are not looking at the mobile phone, it indicates that the user may not need to view or operate the mobile phone, and now, there is no need to power on the mobile phone screen to avoid a misoperation.

If the mobile phone receives the screen recognition success information sent by the smart glasses, combining the moving direction of the mobile phone, the orientation of the screen and the user's palm orientation, it indicates that the user is holding the mobile phone to move towards his or her face and the user's eyes are looking at the mobile phone, therefore, the user needing viewing or operating the mobile phone can be determined, and at this time, the mobile phone screen can be powered on to resolve a problem that the mobile phone screen cannot be powered on until the user triggers a specific key. The above-mentioned steps greatly improve the mobile phone screen powering on accuracy and avoid a misoperation.

Step S260, powering off the mobile terminal screen when all of the moving direction, the orientation of the screen and the palm orientation in the posture recognition information are in a second preset direction.

When the moving direction of the mobile terminal, the orientation of the screen and the palm orientation are in the second preset direction, for example, the direction is away from the user's face, it indicates that the user no longer needs to view or operate the mobile phone, and if the mobile phone screen is in the on state now, in order to save the mobile phone power and resolve a problem that the mobile phone screen cannot be powered off until the user triggers a specific key, the mobile phone screen may be automatically powered off to enable the mobile phone screen to be in the off state accordingly.

It should be noted that the first preset direction is different from the second preset direction. Illustratively, the first preset direction may represent a direction towards the user's face, and the second preset direction may represent a direction away from the user's face. A user related to the embodiments refers to the user who operates the mobile phones in the embodiments, and of course, the user also wears the wearable device related to the embodiments.

With the screen control method provided by the invention, when it is detected that all of the moving direction of the user's handhold mobile terminal, the orientation of the screen and the palm orientation in the posture recognition information are towards the direction of the user's face, and the mobile terminal receives the screen recognition success information sent by the smart glasses worn by the user, it can be determined that the user needs to view or operate the mobile terminal, and at this time, the mobile terminal screen is powered on, so that not only a tedious operation that the mobile terminal screen cannot be started until the user triggers the specific key is eliminated, but also the mobile terminal screen powering on accuracy is improved, thereby avoiding a misoperation.

When it is detected that all of the moving direction of the user's handhold mobile terminal, the orientation of the screen and the palm orientation in the posture recognition information are away from the direction of the user's face, it can be determined that the user no longer needs to view or operate the mobile terminal, so that the mobile terminal screen can be powered off to save power of the mobile terminal, thereby prolonging the battery life and avoiding a tedious operation that the mobile terminal screen cannot be powered off until the user triggers a specific key. Great convenience can be brought to the user when the user operates a mobile device.

It should be noted that the first preset direction may represent a direction towards the user's face, and the second preset direction may represent a direction away from the user's face. As the user is in a standing or sitting state generally, in the above steps, the first preset direction may be the upward direction, the second preset direction may be the downward direction, and when the direction is upward, it means that the direction is towards the user's face. A horizontal plane where the mobile terminal is located can be used as a boundary, when the mobile terminal moves toward the up direction of the horizontal plane, it can be determined that the mobile terminal moves upward, vice versa. Of course, if the mobile terminal moves along the horizontal plane direction, it means that the moving direction of the mobile terminal is in the horizontal direction, i.e. neither moving upward nor moving downward.

The orientation of the mobile terminal screen may also adopt a horizontal plane where the mobile terminal is located as a boundary, and an included angle between a plane where the mobile terminal screen is located and the horizontal plane can be used as a criterion to determine the orientation of the mobile terminal screen. As the prior art is referred to here, the details will not be repeated herein.

The smart wearable device related to the embodiments of the invention mainly refers to a wristband device, such as a smart bracelet, a smart watch or the like, not including smart glasses. The relative position relation of a smart wearable device to the user's wrist should be unchanged as the smart wearable device is worn on the user's wrist, for instance, it can be seen from Fig. 1 that the position of the upper end of the smart bracelet 300 relative to the user's back of the hand should be unchanged, so that rotation information, such as a rotation direction and other information, of the smart bracelet can be detected through an acceleration sensor arranged in the smart bracelet 300, and the user's wrist and palm orientations can be also obtained directly.

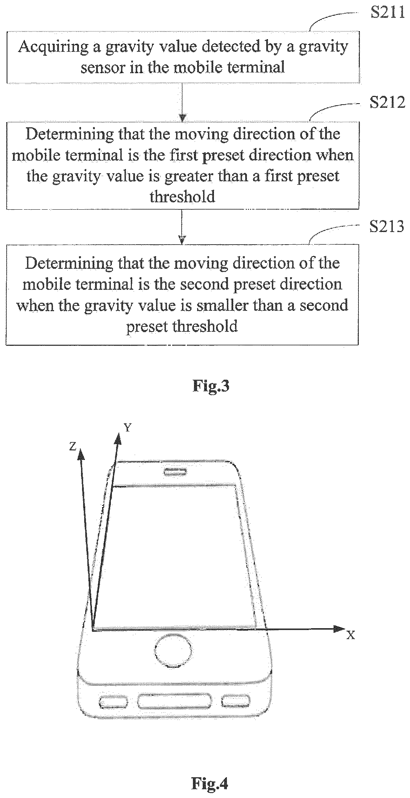

To accurately detect the moving direction of the mobile terminal, as the elaboration of the method in Fig. 2, in another embodiment of the invention as shown in Fig. 3, the step S210 may also comprise the steps as follows.

Step S211, acquiring a gravity value detected by a gravity sensor in the mobile terminal.

Currently, the gravity sensor is generally arranged in the user's mobile terminal, such as a mobile phone, a tablet PC, or the like which is used by the user, and the mobile terminal can acquire the gravity value thereof through the gravity sensor.

In conjunction with Fig. 4, currently, the gravity sensor can detect gravity values of tri-axis, namely (x, y, z), of the mobile terminal.

Step S212, determining that the moving direction of the mobile terminal is the first preset direction when the gravity value is greater than a first preset threshold.

Step S213, determining that the moving direction of the mobile terminal is the second preset direction when the gravity value is smaller than a second preset threshold.

At present, there are many approaches for detecting the moving direction of the mobile terminal through the gravity sensor arranged in the mobile terminal, and the details will not be repeated herein. For instance, the moving direction of the mobile terminal can be judged according to a z-axis gravity value detected by the gravity sensor. If the z-axis gravity value is greater that the first preset threshold, it can be determined that the mobile terminal moves towards the first preset direction, or if the z-axis gravity value is smaller than the second preset threshold, it can be determined that the mobile terminal moves towards the second preset direction.

Illustratively, if the z-axis gravity value is greater that a positive number, it indicates that the mobile terminal moves upwards, or if the z-axis gravity value is smaller than a negative number, it indicates that the mobile terminal moves downwards.

Of course, it should be noted that the first preset threshold is greater than the second preset threshold.

Therefore, the moving direction of the mobile terminal can be quickly and accurately judged according to the gravity value detected by the gravity sensor arranged in the mobile terminal.

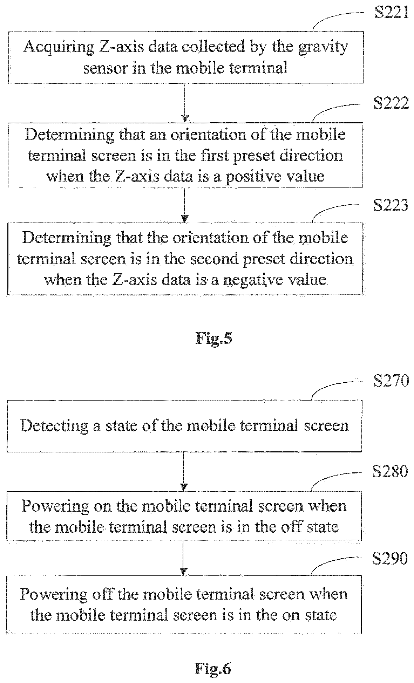

To accurately detect the moving direction of the mobile terminal, as the elaboration of the method in Fig. 2, in another embodiment of the invention as show in Fig. 5, the step S220 may also comprise the steps as follows.

Step S211, acquiring Z-axis data collected by a gravity sensor in the mobile terminal.

Step S222, determining that the orientation of the mobile terminal screen is the first preset direction when the Z-axis data is a positive value.

Step S223, determining that the orientation of the mobile terminal screen is the second preset direction when the Z-axis data is a negative value.

The embodiments are illustrated in conjunction with the above steps and Fig. 4, and the details will not be repeated herein. The orientation of the mobile terminal screen can be fast and accurately judged according to a z-axis gravity value detected by the gravity sensor in the mobile terminal; when the z-axis gravity value is a positive value, it indicates that the orientation of the mobile terminal screen is upward; and when the z-axis gravity value is a negative value, it indicates that the orientation of the mobile terminal screen is downward.

To accurately power on or power off the mobile terminal screen, as the elaboration of the method in Fig. 2, in another embodiment of the invention as shown in Fig. 6, the method may also comprise the steps as follows.

Step S270, detecting a state of the mobile terminal screen.

Step S280, powering on the mobile terminal screen when the mobile terminal screen is in the off state.

Step S290, powering off the mobile terminal screen when the mobile terminal screen is in the on state.

On the basis of Fig. 2, if the user is holding the mobile terminal to move toward the user's face, and the mobile terminal receives the screen recognition success information sent by the smart glasses, it indicates that the user intends to view or operate the mobile terminal, and the state of the mobile terminal screen also needs detection; and if the state of the mobile terminal screen is off at the moment, the mobile terminal screen needs to be powered on, and if the state of the mobile terminal screen is on at the moment, there is no need to operate.

Similarly, if the user is holding the mobile terminal to move towards the direction away from the user's face, it indicates that the user no longer needs to view or operate the mobile terminal, at this time, it is also needed to detect whether the state of the mobile terminal screen is in the off state, if no, the mobile terminal screen should be powered off, and if yes, no operation is needed anymore.

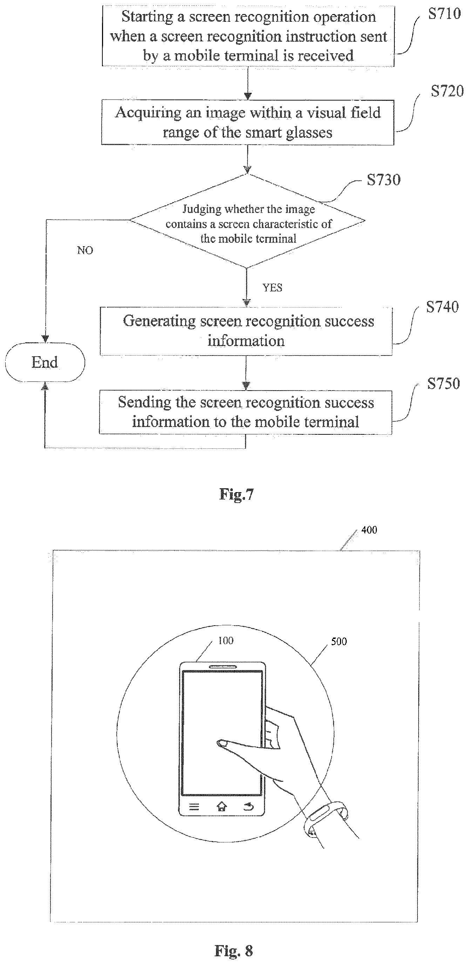

To describe in detail how a smart glasses 200 detects whether the user views the mobile terminal 100 in Fig. 2, in another embodiment of the invention, as shown in Fig. 7, there is provided with a screen control method applied to the smart glasses, and the method comprises the steps as follows.

Step S710, starting a screen recognition operation when a screen recognition instruction sent by a mobile terminal is received.

The smart glasses and the mobile terminal are pre-bound, and communicate with each other through Bluetooth and in other ways. When receiving the screen recognition instruction sent by the mobile terminal, the smart glasses start the screen recognition operation, such as enabling a camera, and the like.

Step S720, acquiring an image within a visual field range of the smart glasses.

Step S730, judging whether the image contains a screen characteristic of the mobile terminal.

When the image contains the screen characteristic of the mobile terminal, the step S740 is performed.

Step S740, generating screen recognition success information.

Step S750, sending the screen recognition success information to the mobile terminal.

After the smart glasses enable a camera thereof, it is necessary to shoot views within a visual field range of a certain direction, and at this time, there are two approaches for recognition and judgment.

In the first approach, images in the user's eye viewing direction are shot through a more mature eyeball tracking technology in the prior art, and then step S730 is performed. Herein, a visual field range of the image shot by the smart glasses may be relatively narrow, so that whether the user is looking at the mobile terminal screen can be recognized very easily.

In the second approach, after the smart glasses enable the camera thereof to shoot all scenery images within the visual field range, in this case, objects contained in the image shot by the smart glasses may be more. However, since the smart glasses move along with the movement of the user's head, the relative position of the smart glasses to the user's head is unchanged, so that an image with a preset area can be taken out as a target area image by using a central position of the shot image as a center, and a detection is made as to whether the target image contains the screen characteristic of the mobile terminal, that is, the step S730 is performed. Specifically referring to Fig. 8, in Fig. 8, 100 represents the mobile terminal, 500 represents the target area image selected from the image shot by the smart glasses, and 400 represents the image shot by the smart glasses.

Besides, it is also needed to judge whether the user's eyes are in a closed state, if the user's eyes are in a closed state at present, it indicates that the user action of hand-holding the mobile terminal may be a habitual action, and the user does not need to view or operate the mobile terminal, so that the performance of the above step may end. If the smart glasses recognize that the characteristic information of the mobile terminal is not a screen characteristic from the image shot by itself, but a side or back of the mobile terminal, it also indicates that the user action of hand-holding the mobile terminal may be the habitual action, and the user does not need to view or operate the mobile terminal, so that the performance of the above step may also end.

Through the smart glasses for recognition of the image within the visual field range thereof in the above steps, whether the user is looking at or watching the mobile terminal screen can be accurately judged, if the user is looking at the mobile terminal screen, it means that the smart glasses have successfully recognized the mobile terminal screen, and the screen recognition success information can be generated and sent to the mobile terminal, so that the mobile terminal can perform a corresponding operation.

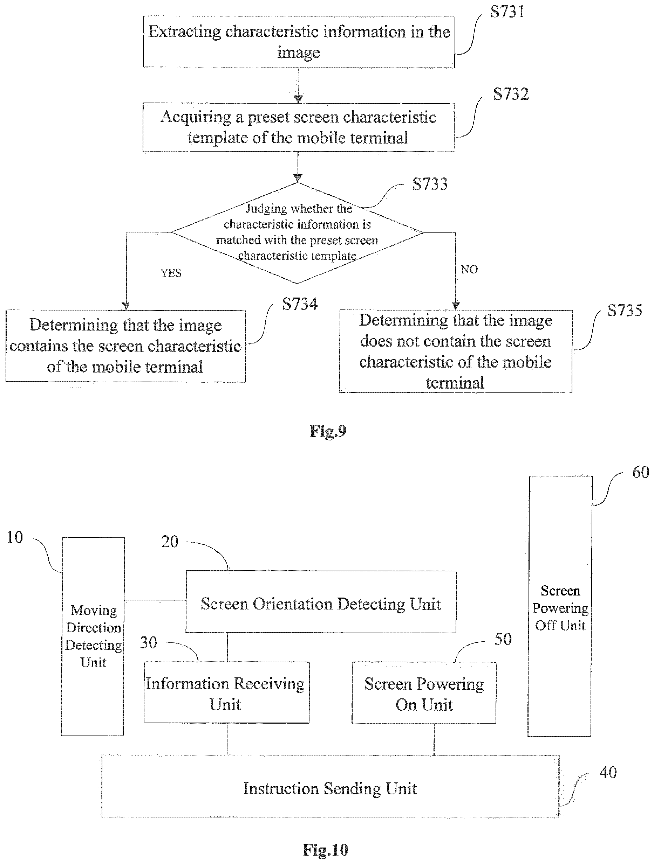

To describe in more detail how to judge whether the image shot by the smart glasses 200 contains the screen characteristic of the mobile terminal, as the elaboration of the method in Fig. 7, in another embodiment of the invention as shown in Fig.9, the step S730 may also comprise the steps as follows.

Step S731, extracting characteristic information in the image.

Extraction of the characteristic information in the image shot by the smart glasses mainly comprises a step of extracting the characteristic information of the image containing the mobile terminal screen, which can be specifically realized through image preprocessing, area-of-interest extraction, and image characteristic extraction, and the details will not be repeated herein.

Step S732, acquiring a preset screen characteristic template of the mobile terminal.

The screen characteristic template of the mobile terminal should be preset, and can be stored in a local database of the smart glasses. Various types of screen characteristic templates of the mobile terminal can be stored, and may comprise screen characteristics of the mobile terminal in different postures.

Step S733, judging whether the characteristic information is matched with the preset screen characteristic template.

A matching degree can be set, when the matching degree of the characteristic information and the screen characteristic template is greater than or equal to a certain set threshold, it is determined that the characteristic information is matched with the screen characteristic template, and vice versa.

When the characteristic information is matched with the screen characteristic template, step S734 is performed.

Step S734, determining that the image contains the screen characteristic of the mobile terminal.

If the characteristic information is matched with the screen characteristic template, it indicates that the image contains the screen characteristic of the mobile terminal, that is, the user is looking at the mobile terminal screen.

When the characteristic information is unmatched with the screen characteristic template, step S735 is performed.

Step S735, determining that the image does not contain the screen characteristic of the mobile terminal.

If the characteristic information is unmatched with the screen characteristic template, it indicates that the image does not contain the screen characteristic of the mobile terminal, that is, the user is not looking at the mobile terminal screen.

Through the recognition of the image shot by the smart glasses, whether the image contains the screen characteristic of the mobile terminal can be accurately judged by a characteristic matching method, that is, whether the user is looking at or watching the mobile terminal screen can be determined.

Through the description of the method by the above embodiments, those skilled in the art can understand clearly that the invention may be implemented through software and an indispensable universal hardware platform, of course, also be implemented through hardware, but in many cases the former is a better embodiment. Based on such understanding, essentially, the technical scheme of the invention or parts contributing to the prior art can be embodied in the form of a software product, the computer software product is stored in a storage medium which includes a plurality of instructions to make computer equipment (which may be a personal computer, a server, network equipment, or the like) to perform all or part of the steps of the method of all embodiments of the invention. The aforementioned storage medium comprises various media capable of storing program codes, such as a read-only memory (ROM), a random access memory (RAM), a magnetic or optical disk, or the like.

In addition, as implementations of the above embodiments, the embodiment of the invention further provides a screen control device applied to a mobile terminal. As shown in Fig. 10, the device comprises a moving direction detecting unit 10, a screen orientation detecting unit 20, an information receiving unit 30, an instruction sending unit 40, a screen powering on unit 50 and a screen powering off unit 60, wherein
the moving direction detecting unit 10 is configured to detect a moving direction of the mobile terminal;
the screen orientation detecting unit 20 is configured to detect an orientation of a mobile terminal screen;
the information receiving unit 30 is configured to receive posture recognition information sent by a preset smart wearable device;
the instruction sending unit 40 is configured to send a screen recognition instruction to preset smart glasses when all of the moving direction, the orientation of the screen and a palm orientation in the posture recognition information are in a first preset direction;
the screen powering on unit 50 is configured to power on the mobile terminal screen when screen recognition success information sent by the preset smart glasses is received; and
the screen powering off unit 60 is configured to power off the mobile terminal screen when all of
the moving direction, the orientation of the screen and the palm orientation in the posture recognition information are in a second preset direction, the first preset direction being different from the second preset direction.

In addition, the first preset direction is an upward direction, and the second preset direction is a downward direction.

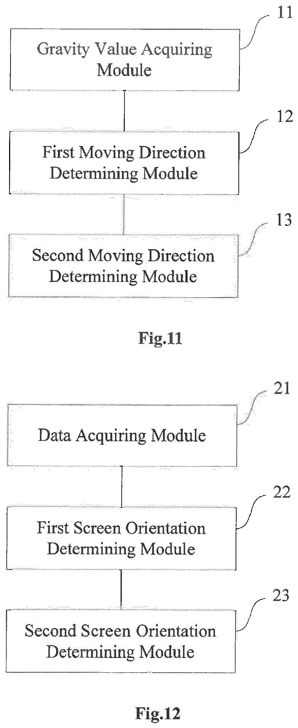

Based on Fig. 10, in another embodiment of the invention, as shown in Fig. 11, the moving direction detecting unit 10 comprises a gravity value acquiring module 11, a first moving direction determining module 12 and a second moving direction determining module 13, wherein the gravity value acquiring module 11 is configured to acquire a gravity value detected by a gravity sensor in the mobile terminal;
the first moving direction determining module 12 is configured to determine that the moving direction of the mobile terminal is the first preset direction when the gravity value is greater than a first preset threshold; and
the second moving direction determining module 13 is configured to determine that the moving direction of the mobile terminal is the second preset direction when the gravity value is smaller than a second preset threshold, the first preset threshold being greater than the second preset threshold.

Based on Fig. 10, in another embodiment of the invention, as shown in Fig. 12, the screen orientation detecting unit 20 comprises a data acquiring module 21, a first screen orientation determining module 22 and a second screen orientation determining module 23, wherein
the data acquiring module 21 is configured to acquire Z-axis data collected by the gravity sensor in the mobile terminal;
the first screen orientation determining module 22 is configured to determine that the orientation of the mobile terminal screen is in the first preset direction when the Z-axis data is a positive value; and
the second screen orientation determining module 23 is configured to determine that the orientation of the mobile terminal screen is in the second preset direction when the Z-axis data is a negative value.

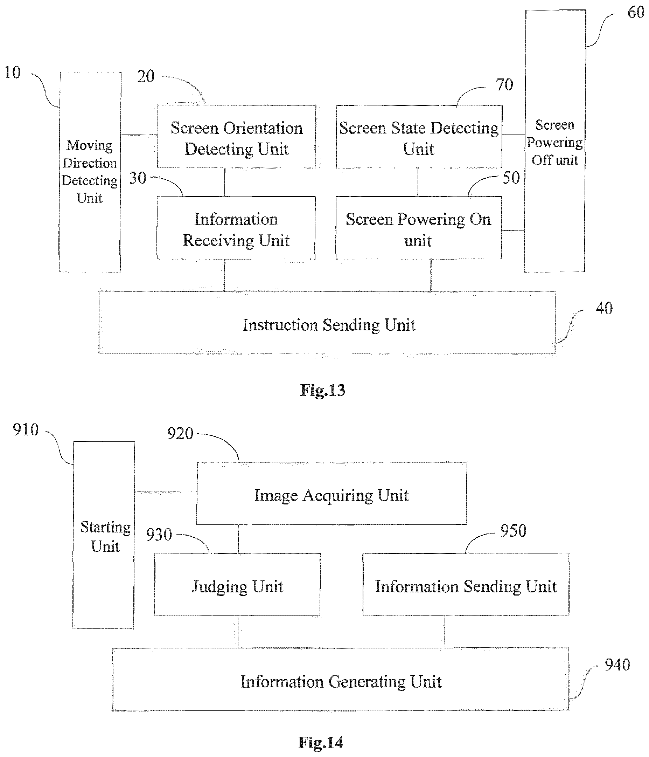

Based on Fig. 10, in another embodiment of the invention, as shown in Fig. 13, the device further comprises a screen state detecting unit 70, wherein
the screen state detecting unit 70 is configured to detect a state of the mobile terminal screen;
the screen powering on unit 50 is also configured to power on the mobile terminal screen when the mobile terminal screen is in the off state; and
the screen powering off unit 60 is also configured to power off the mobile terminal screen when the mobile terminal screen is in the on state.

In addition, the embodiment of the invention further provides a screen control device used in smart glasses, as shown in Fig. 14, the device comprises a starting unit 910, an image acquiring unit 920, a judging unit 930, an information generating unit 940 and an information sending unit 950, wherein
the starting unit 910 is configured to start a screen recognition operation when a screen recognition instruction sent by a mobile terminal is received;
the image acquiring unit 920 is configured to acquire an image within a visual field range of the smart glasses;
the judging unit 930 is configured to judge whether the image contains screen characteristic of the mobile terminal;
the information generating unit 940 is configured to generate screen recognition success information when the image contains the screen characteristic of the mobile terminal; and the information sending unit 950 is configured to send the screen recognition success information to the mobile terminal.

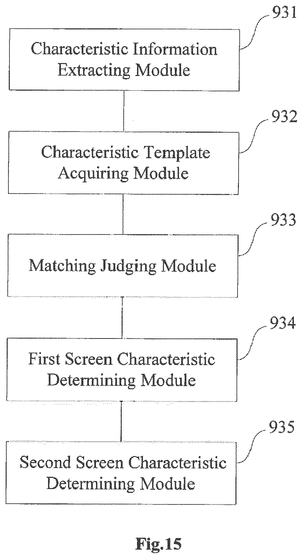

Based on Fig. 14, in another embodiment of the invention, as shown in Fig. 15, the judging unit 930 comprises a characteristic information extracting module 931, a characteristic template acquiring module 932, a matching judging module 933, a first screen characteristic determining module 934 and a second screen characteristic determining module 935, wherein
the characteristic information extracting module 931 is configured to extract characteristic information in the image;
the characteristic template acquiring module 932 is configured to acquiring a preset screen characteristic template of the mobile terminal;
the matching judging module 933 is configured to judge whether the characteristic information is matched with the preset screen characteristic template;
the first screen characteristic determining module 934 is configured to determine that the image contains the screen characteristic of the mobile terminal when the characteristic information is matched with the preset screen characteristic template; and
the second screen characteristic determining module 935 is configured to determine that the image does not contain the screen characteristic of the mobile terminal when the characteristic information is unmatched with the preset screen characteristic template.

With respect to the devices in the above embodiments, the specific manners for performing operations in individual modules therein have been described in detail in the embodiments regarding the related methods and will not be elaborated herein.

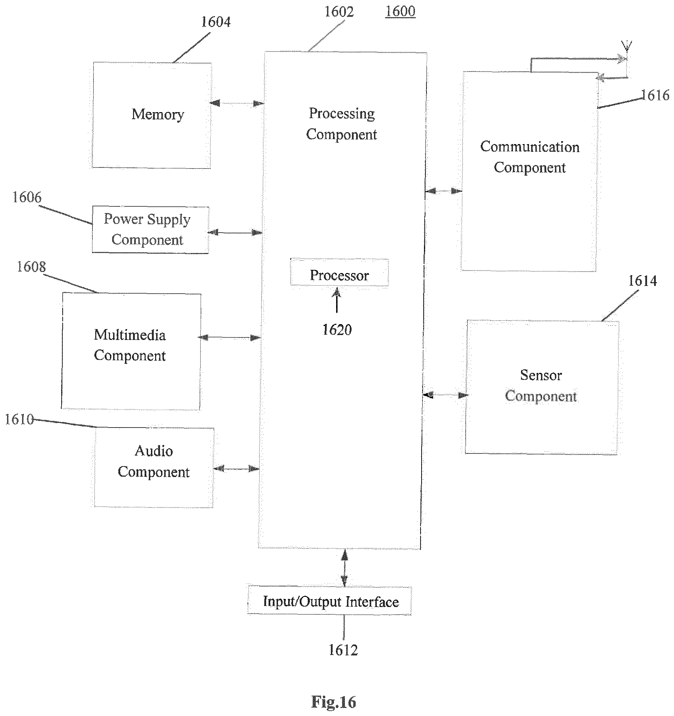

Fig. 16 is a structure diagram of a screen control terminal 1600 according to an exemplary embodiment. Fox example, the terminal 1600 may be a mobile phone, a computer, a digital broadcast terminal, a message transceiver, a game console, a tablet device, a medical device, fitness equipment, a personal digital assistant, or the like.

Referring to Fig. 16, the terminal 1600 may include one or more following components: a processing component 1602, a memory 1604, a power supply component 1606, a multimedia component 1608, an audio component 1610, an input/output (I/O) interface 1612, a sensor component 1614 and a communication component 1616.

The processing component 1602 typically controls overall operations of the terminal 1600, such as the operations associated with display, telephone calls, data communications, camera operations and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For example, the processing component 1602 may include a multimedia module to facilitate the interaction between the multimedia component 1608 and the processing component 1602.

The memory 1604 is configured to store various types of data to support the operation of the terminal 1600. Examples of such data include instructions for any applications or methods operated on the terminal 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 1606 provides power to various components of the terminal 1600. The power supply component 1606 may include a power supply management system, one or more power sources, and any other components associated with the generation, management, and distribution of power in terminal 1600.

The multimedia component 1608 includes a screen providing an output interface between the terminal 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and/or the rear camera may receive an external multimedia datum while the terminal 1600 is in an operation mode, such as a photographing mode or a video mode. Each of the front and rear cameras may be a fixed optical lens system or have a focus and optical zoom capability.

The audio component 1610 is configured to output and/or input audio signals. For example, the audio component 1610 includes a microphone (MIC) configured to receive an external audio signal when the terminal 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the terminal 1600. For instance, the sensor component 1614 may detect an open/closed status of the terminal 1600, relative positioning of components, e.g., the display and the keypad, of the terminal 1600, a change in position of the terminal 1600 or a component of the terminal 1600, a presence or absence of user's contact with the terminal 1600, an orientation or an acceleration/deceleration of the terminal 1600, and a change in temperature of the terminal 1600. The sensor component 1614 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor or a temperature sensor.

The communication component 1616 is configured to facilitate communication, wired or wirelessly, between the terminal 1600 and other devices. The terminal 1600 can access a wireless network based on a communication standard, such as WiFi, 2G, or 3G, or a combination thereof. In one exemplary embodiment, the communication component 1616 receives a broadcast signal or broadcast associated information from an external broadcast management system via a broadcast channel. In one exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium comprising instructions, such as comprised in the memory 1604, executable by the processor 1620 in the terminal 1600, for performing the above-described methods. For example, the non-transitory computer-readable storage medium may be a ROM, a RAM, a CD-ROM, a magnetic tape, a floppy disc, an optical data storage device, and the like.

Wherein, the terminal 1600 may be a mobile terminal or smart glasses.

There is provided a non-transitory computer-readable storage medium, when instructions in the storage medium are executed by the processor of the mobile terminal, the mobile terminal can perform a screen control method which comprises:
detecting a moving direction of the mobile terminal;
detecting an orientation of a mobile terminal screen;
receiving posture recognition information sent by a preset smart wearable device;
sending a screen recognition instruction to preset smart glasses when all of the moving direction, the orientation of the screen and a palm orientation in the posture recognition information are in a first preset direction, and powering on the mobile terminal screen when screen recognition success information sent by the preset smart glasses is received; and
powering off the mobile terminal screen when all of the moving direction, the orientation of the screen and the palm orientation in the posture recognition information are in a second preset direction, the first preset direction being different from the second preset direction.

In addition, there is provided a non-transitory computer-readable storage medium, when instructions in the storage medium are executed by the processor of the smart glasses, the smart glasses can perform a screen control method which comprises:
starting a screen recognition operation when a screen recognition instruction sent by a mobile terminal is received;
acquiring an image within a visual field range of the smart glasses;
judging whether the image contains a screen characteristic of the mobile terminal;
generating screen recognition success information when the image contains the screen characteristic of the mobile terminal; and
sending the screen recognition success information to the mobile terminal.
It's understandable that the invention can be used for numerous general or special computing system environments or configurations. Such as personal computers, server computers, handheld or portable devices, tablet-type devices, multiprocessor systems, microprocessor-based systems, set top boxes, programmable consumer electronic devices, network PCs, minicomputers, mainframe computers, distributed computing environments including the above systems or devices, and the like.

The present invention may be executed by computer-executable computer instructions described in the general context, such as program modules. Generally, program modules include that perform particular tasks or implement particular abstract data type routines, programs, objects, components, data structures, and the like. The present invention may also be practiced in a distributed computing environment, in which remote processing devices are connected through a communications network to perform the task. In a distributed computing environment, program modules may be located in both local and remote computer storage media including storage devices.

It should be noted that, as used herein, relation terms such as "first", "second" and the like are used merely to distinguish a subject or an operation from another subject or another operation, and not to imply any substantial relation or order between these subjects or operations. Moreover, terms "include/comprise", "contain" or any variation thereof are intended to cover a nonexclusive containing, such that a process, a method, an item or a device containing a series of elements not only includes these elements, but also includes other elements that are not set forth specifically, or also includes an inherent element of such a process, method, item or device. Without further limitation, an element defined by a phrase "include/comprise a" does not mean that other elements are excluded from the process, method, item or device including the same element.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for controlling a screen of a mobile terminal (100), comprising:
detecting a moving direction of the mobile terminal (100);
detecting an orientation of the mobile terminal screen; and
receiving posture recognition information sent by a smart wearable device (300), the posture recognition information including a palmward orientation of a user using the smart wearable device (300); wherein the method comprises :
sending a screen recognition instruction to a smart glasses (200)
when all of the moving direction, the orientation of the screen and a palm orientation in the posture recognition information are in a first direction, and powering on the mobile terminal screen when screen recognition success information sent by the smart glasses is received by the mobile terminal (100); and
powering off the mobile terminal screen when all of the moving direction, the orientation of the screen and the palm orientation in the posture recognition information are in a second direction, wherein the first direction is an upward direction and the second direction is a downward direction.

2. The method of claim 1, wherein detecting the moving direction of the mobile terminal comprises:
acquiring a Z-axis gravity value detected by a gravity sensor in the mobile terminal;
determining that the moving direction of the mobile terminal is the first direction when the Z-axis gravity value is greater than a first preset threshold; and
determining that the moving direction of the mobile terminal is the second direction when the Z-axis gravity value is smaller than a second preset threshold, the first preset threshold being greater than the second preset threshold.

3. The method of claim 1, wherein detecting the orientation of the mobile terminal screen comprises:
acquiring Z-axis data collected by the gravity sensor in the mobile terminal;
determining that the orientation of the mobile terminal screen is in the first direction when the Z-axis data is a positive value; and
determining that the orientation of the mobile terminal screen is in the second direction when the Z-axis data is a negative value.

4. The method of claim 1, wherein the step of powering on the mobile terminal screen when screen recognition success information sent by the smart glasses is received further comprises:
detecting a state of the mobile terminal screen when screen recognition success information sent by the smart glasses is received;
performing the step of powering on the mobile terminal screen when the mobile terminal screen is in the off state; and
the step of powering off the mobile terminal screen when all of the moving direction, the orientation of the screen and the palm orientation in the posture recognition information are in a second direction further comprises:
detecting a state of the mobile terminal screen when all of the moving direction, the orientation of the screen and the palm orientation in the posture recognition information are in a second direction;
performing the step of powering off the mobile terminal screen when the mobile terminal screen is in the on state.

5. The method of claim 1, further comprising:
starting a screen recognition operation when a screen recognition instruction sent by a mobile terminal is received;
acquiring an image within a visual field range of the smart glasses; and
judging whether the image contains a screen characteristic of the mobile terminal, and detecting whether the user's eyeballs are looking at the mobile terminal;
generating screen recognition success information when the image contains the screen characteristic of the mobile terminal and the user's eyeballs are looking at the mobile terminal; and
sending the screen recognition success information to the mobile terminal so that the mobile terminal lights up the screen of the mobile terminal.

6. The method of claim 5, wherein judging whether the image contains the screen characteristic of the mobile terminal comprises:
extracting characteristic information in the image;
acquiring a preset screen characteristic template of the mobile terminal;
judging whether the characteristic information is matched with the preset screen characteristic template;
determining that the image contains the screen characteristic of the mobile terminal when the characteristic information is matched with the preset screen characteristic template; and
determining that the image does not contain the screen characteristic of the mobile terminal when the characteristic information is unmatched with the preset screen characteristic template.

7. A device for controlling a screen of a mobile terminal (100), comprising:
a moving direction detecting unit (10) configured to detect a moving direction of the mobile terminal (100);
a screen orientation detecting unit (20) configured to detect an orientation of the mobile terminal screen; and
an information receiving unit (30) configured to receive posture recognition information sent by a smart wearable device (300), the posture recognition information including a palmward orientation of a user using the smart wearable device;
an instruction sending unit (40) configured to send a screen recognition instruction to a smart glasses when all of the moving direction, the orientation of the screen and a palm orientation in the posture recognition information are in a first direction;
a screen powering on unit (50) configured to power on the mobile terminal screen when screen recognition success information sent by the smart glasses (200) is received; and
a screen powering off unit (60) configured to power off the mobile terminal screen when all of the moving direction, the orientation of the screen and the palm orientation in the posture recognition information are in a second direction, wherein the first direction is an upward direction and the second direction is a downward direction.

8. The device of claim 7, wherein the moving direction detecting unit comprises:
a gravity value acquiring module (11) configured to acquire a Z-axis gravity value detected by a gravity sensor in the mobile terminal;
a first moving direction determining module (12) configured to determine that the moving direction of the mobile terminal is the first preset direction when the Z-axis gravity value is greater than a first preset threshold; and
a second moving direction determining module (13) configured to determine that the moving direction of the mobile terminal is the second direction when the Z-axis gravity value is smaller than a second preset threshold, the first preset threshold being greater than the second preset threshold.

9. The device of claim 7, wherein the screen orientation detecting unit comprises:
a data acquiring module (21) configured to acquire Z-axis data collected by the gravity sensor in the mobile terminal;
a first screen orientation determining module (22) configured to determine that the orientation of the mobile terminal screen is in the first direction when the Z-axis data is a positive value; and
a second screen orientation determining module (23) configured to determine that the orientation of the mobile terminal screen is in the second direction when the Z-axis data is a negative value.

10. The device of claim 7, wherein the device further comprises:
a screen state detecting unit (70) configured to detect a state of the mobile terminal screen when screen recognition success information sent by the smart glasses is received and when all of the moving direction, the orientation of the screen and the palm orientation in the posture recognition information are in a second direction;
a screen powering on unit configured to power on the mobile terminal screen when the mobile terminal screen is in the off state; and
a screen powering off unit configured to power off the mobile terminal screen when the mobile terminal screen is in the on state.

11. A system comprising the device of claim 7 and said smart glasses, said smart glasses further comprising:
a starting unit (910) configured to start a screen recognition operation when a screen recognition instruction sent by a mobile terminal is received;
an image acquiring unit (920) configured to acquire an image within a visual field range of the smart glasses;
a judging unit (930) configured to judge whether the image contains screen characteristic of the mobile terminal and detecting whether the user's eyeballs are looking at the mobile terminal;
an information generating unit (940) configured to generate screen recognition success information when the image contains the screen characteristic of the mobile terminal and the user's eyeballs are looking at the mobile terminal; and
an information sending unit (950) configured to send the screen recognition success information to the mobile terminal so that the mobile terminal lights up the screen of the mobile terminal.

12. The system of claim 11, wherein the judging unit further comprises:
a characteristic information extracting module (931) configured to extract characteristic information in the image;
a characteristic template acquiring module (932) configured to acquire a preset screen characteristic template of the mobile terminal;
a matching judging module (933) configured to judge whether the characteristic information is matched with the preset screen characteristic template;
a first screen characteristic determining module (934) configured to determine that the image contains the screen characteristic of the mobile terminal when the characteristic information is matched with the preset screen characteristic template; and
a second screen characteristic determining module (935) configured to determine that the image does not contain the screen characteristic of the mobile terminal when the characteristic information is unmatched with the preset screen characteristic template.

13. A computer program including instructions for executing the steps of a screen control method according to any one of claims 1-4 when said program is executed by a computer.

## Patentansprüche

1. Verfahren zum Steuern eines Bildschirms eines mobilen Endgeräts (100), umfassend:
Erfassen einer Bewegungsrichtung des mobilen Endgeräts (100);
Erfassen einer Orientierung des Bildschirms des mobilen Endgeräts; und
Empfangen von Haltungserkennungsinformationen, die durch eine smarte tragbare Vorrichtung (300) gesendet werden, wobei die Haltungserkennungsinformationen eine zur Handfläche gerichtete Orientierung eines Benutzers, der die smarte tragbare Vorrichtung (300) verwendet, enthalten, wobei das Verfahren umfasst:
Senden einer Bildschirmerkennungsanweisung an eine smarte Brille (200), wenn alle von der Bewegungsrichtung, der Orientierung des Bildschirms und einer Handflächenorientierung in den Haltungserkennungsinformationen in einer ersten Richtung verlaufen, und Einschalten des Bildschirms des mobilen Endgeräts, wenn Bildschirmerkennungserfolgsinformationen, die durch die smarte Brille gesendet werden, durch das mobile Endgerät (100) empfangen werden; und
Ausschalten des Bildschirms des mobilen Endgeräts, wenn alle von der Bewegungsrichtung, der Orientierung des Bildschirms und der Handflächenorientierung in den Haltungserkennungsinformationen in einer zweiten Richtung verlaufen, wobei die erste Richtung eine nach oben gerichtete Richtung ist und die zweite Richtung eine nach unten gerichtete Richtung ist.

2. Verfahren nach Anspruch 1, wobei ein Erfassen der Bewegungsrichtung des mobilen Endgeräts umfasst:
Erfassen eines Z-Achsen-Gravitationswerts, der durch einen Gravitationssensor im mobilen Endgerät erfasst wird;
Bestimmen, dass die Bewegungsrichtung des mobilen Endgeräts die erste Richtung ist, wenn der Z-Achsen-Gravitationswert größer als ein erster voreingestellter Schwellenwert ist; und
Bestimmen, dass die Bewegungsrichtung des mobilen Endgeräts die zweite Richtung ist, wenn der Z-Achsen-Gravitationswert kleiner als ein zweiter voreingestellter Schwellenwert ist, wobei der erste voreingestellte Schwellenwert größer als der zweite voreingestellte Schwellenwert ist.

3. Verfahren nach Anspruch 1, wobei ein Erfassen einer Orientierung des Bildschirms des mobilen Endgeräts umfasst.
Erfassen von Z-Achsen-Daten, die durch den Gravitationssensor im mobilen Endgerät erhobenwerden;
Bestimmen, dass die Orientierung des Bildschirms des mobilen Endgeräts in der ersten Richtung ist, wenn die Z-Achsen-Daten ein positiver Wert sind; und
Bestimmen, dass die Orientierung des Bildschirms des mobilen Endgeräts in der zweiten Richtung ist, wenn die Z-Achsen-Daten ein negativer Wert sind.

4. Verfahren nach Anspruch 1, wobei der Schritt zum Einschalten des Bildschirms des mobilen Endgeräts, wenn Bildschirmerkennungserfolgsinformationen, die durch die smarte Brille gesendet werden, empfangen werden, weiter umfasst:
Erfassen eines Zustands des Bildschirms des mobilen Endgeräts, wenn Bildschirmerkennungserfolgsinformationen, die durch die smarte Brille gesendet werden, empfangen werden;
Durchführen des Schritts zum Einschalten des Bildschirms des mobilen Endgeräts, wenn der Bildschirm des mobilen Endgeräts im ausgeschalteten Zustand ist; und
der Schritt zum Ausschalten des Bildschirms des mobilen Endgeräts, wenn alle von der Bewegungsrichtung, der Orientierung des Bildschirms und der Handflächenorientierung in den Haltungserkennungsinformationen in einer zweiten Richtung verlaufen, weiter umfasst:
Erfassen eines Zustands des Bildschirms des mobilen Endgeräts, wenn alle von der Bewegungsrichtung, der Orientierung des Bildschirms und der Handflächenorientierung in den Haltungserkennungsinformationen in einer zweiten Richtung verlaufen;
Durchführen des Schritts zum Ausschalten des Bildschirms des mobilen Endgeräts, wenn der Bildschirm des mobilen Endgeräts im eingeschalteten Zustand ist.

5. Verfahren nach Anspruch 1, weiter umfassend:
Starten eines Bildschirmerkennungsvorgangs, wenn eine Bildschirmerkennungsanweisung, die durch ein mobiles Endgerät gesendet wird, empfangen wird;
Erfassen eines Bildes innerhalb eines Sichtfeldbereichs der smarten Brille; und
Beurteilen, ob das Bild ein Bildschirmmerkmal des mobilen Endgeräts enthält, und Erfassen, ob die Augäpfel des Benutzers auf das mobile Endgerät blicken;
Erzeugen von Bildschirmerkennungserfolgsinformationen, wenn das Bild das Bildschirmmerkmal des mobilen Endgeräts enthält und die Augäpfel des Benutzers auf das mobile Endgerät blicken; und
Senden der Bildschirmerkennungserfolgsinformationen an das mobile Endgerät, sodass das mobile Endgerät den Schirm des mobilen Endgeräts erleuchtet.

6. Verfahren nach Anspruch 5, wobei ein Beurteilen, ob das Bild das Bildschirmmerkmal des mobilen Endgeräts enthält, umfasst:
Extrahieren von Merkmalinformationen im Bild;
Erfassen eines voreingestellten Bildschirmmerkmaltemplates des mobilen Endgeräts;
Beurteilen, ob die Merkmalinformationen mit dem voreingestellten Bildschirmmerkmaltemplate übereinstimmen;
Bestimmen, dass das Bild das Bildschirmmerkmal des mobilen Endgeräts enthält, wenn die Merkmalinformationen mit der voreingestellten Bildschirmmerkmaltemplate übereinstimmen; und
Bestimmen, dass das Bild das Bildschirmmerkmal des mobilen Endgeräts nicht enthält, wenn die Merkmalinformationen mit der voreingestellten Bildschirmmerkmaltemplate nicht übereinstimmen.

7. Vorrichtung zum Steuern eines Bildschirms eines mobilen Endgeräts (100), umfassend:
eine Bewegungsrichtungserfassungseinheit (10), die konfiguriert ist zum Erfassen einer Bewegungsrichtung des mobilen Endgeräts (100);
eine Bildschirmorientierungserfassungseinheit (20), die konfiguriert ist zum Erfassen einer Orientierung des Bildschirms des mobilen Endgeräts; und
eine Informationsempfangseinheit (30), die konfiguriert ist zum Empfangen von Haltungserkennungsinformationen, die durch eine smarte tragbare Vorrichtung (300) gesendet werden, wobei die Haltungserkennungsinformationen eine zur Handfläche gerichtete Orientierung eines Benutzers, der die smarte tragbare Vorrichtung (verwendet, enthalten;
eine Anweisungssendungseinheit (40), die konfiguriert ist zum Senden einer Bildschirmerkennungsanweisung an eine smarte Brille, wenn alle von der Bewegungsrichtung, der Orientierung des Bildschirms und einer Handflächenorientierung in den Haltungserkennungsinformationen in einer ersten Richtung verlaufen;
eine Bildschirmeinschalteinheit (50), die konfiguriert ist zum Einschalten des Bildschirms des mobilen Endgeräts, wenn Bildschirmerkennungserfolgsinformationen, die durch die smarte Brille (200) gesendet werden, empfangen werden; und
eine Bildschirmausschalteinheit (60), die konfiguriert ist zum Ausschalten des Bildschirms des mobilen Endgeräts, wenn alle von der Bewegungsrichtung, der Orientierung des Bildschirms und der Handflächenorientierung in den Haltungserkennungsinformationen in einer zweiten Richtung verlaufen, wobei die erste Richtung eine nach oben gerichtete Richtung ist und die zweite Richtung eine nach unten gerichtete Richtung ist.

8. Vorrichtung nach Anspruch 7, wobei die Bewegungsrichtungserfassungseinheit umfasst:
ein Gravitätswerterfassungsmodul (11), das konfiguriert ist zum Erfassen eines Z-Achsen-Gravitationswerts, der durch einen Gravitationssensor im mobilen Endgerät erfasst wird;
ein erstes Bewegungsrichtungsbestimmungsmodul (12), das konfiguriert ist zum Bestimmen, dass die Bewegungsrichtung des mobilen Endgeräts die erste voreingestellte Richtung ist, wenn der Z-Achsen-Gravitationswert größer als ein erster voreingestellter Schwellenwert ist; und
ein zweites Bewegungsrichtungsbestimmungsmodul (13), das konfiguriert ist zum Bestimmen, dass die Bewegungsrichtung des mobilen Endgeräts die zweite Richtung ist, wenn der Z-Achsen-Gravitationswert kleiner als ein zweiter voreingestellter Schwellenwert ist, wobei der erste voreingestellte Schwellenwert größer als der zweite voreingestellte Schwellenwert ist.

9. Vorrichtung nach Anspruch 7, wobei die Bildschirmorientierungserfassungseinheit umfasst:
ein Datenerfassungsmodul (21), das konfiguriert ist zum Erfassen von Z-Achsendaten, die durch den Gravitationssensor im mobilen Endgerät erhoben werden;
ein erstes Bildschirmorientierungsbestimmungsmodul (22), das konfiguriert ist, zum Bestimmen, dass die Orientierung des Bildschirms des mobilen Endgeräts in der ersten Richtung ist, wenn die Z-Achsendaten ein positiver Wert sind; und
ein zweites Bildschirmorientierungsbestimmungsmodul (23), das konfiguriert ist, zum Bestimmen, dass die Orientierung des Bildschirms des mobilen Endgeräts in der zweiten Richtung ist, wenn die Z-Achsendaten ein negativer Wert sind.

10. Vorrichtung nach Anspruch 7, wobei die Vorrichtung weiter umfasst:
eine Bildschirmzustandserfassungseinheit (70), die konfiguriert ist zum Erfassen eines Zustands des Bildschirms des mobilen Endgeräts, wenn Bildschirmerkennungserfolgsinformationen, die durch die smarte Brille gesendet werden, empfangen werden und wenn alle von der Bewegungsrichtung, der Orientierung des Bildschirms und der Handflächenorientierung in den Haltungserkennungsinformationen in einer zweiten Richtung verlaufen;
eine Bildschirmeinschalteinheit, die konfiguriert ist zum Einschalten des Bildschirms des mobilen Endgeräts, wenn der Bildschirm des mobilen Endgeräts im ausgeschalteten Zustand ist; und
eine Bildschirmausschalteinheit, die konfiguriert ist zum Ausschalten des Bildschirms des mobilen Endgeräts, wenn der Bildschirm des mobilen Endgeräts im eingeschalteten Zustand ist.

11. System nach Anspruch 7 und die smarte Brille, die smarte Brille weiter umfassend:
eine Starteinheit (910), die konfiguriert ist zum Starten eines Bildschirmerkennungsvorgangs, wenn eine Bildschirmerkennungsanweisung, die durch ein mobiles Endgerät gesendet wird, empfangen wird;
eine Bilderfassungseinheit (920), die konfiguriert ist zum Erfassen eines Bildes innerhalb eines Sichtfeldbereichs der smarten Brille;
eine Beurteilungseinheit (930), die konfiguriert ist zum Beurteilen, ob das Bild ein Bildschirmmerkmal des mobilen Endgeräts enthält, und zum Erfassen, ob die Augäpfel des Benutzers auf das mobile Endgerät blicken;
eine Informationserzeugungseinheit (940), die konfiguriert ist zum Erzeugen von Bildschirmerkennungserfolgsinformationen, wenn das Bild das Bildschirmmerkmal des mobilen Endgeräts enthält und die Augäpfel des Benutzers auf das mobile Endgerät blicken; und
eine Informationssendeeinheit (950), die konfiguriert ist zum Senden der Bildschirmerkennungserfolgsinformationen an das mobile Endgerät, sodass das mobile Endgerät den Schirm des mobilen Endgeräts erleuchtet.

12. System nach Anspruch 11, worin die Beurteilungseinheit weiter umfasst:
ein Merkmalinformationsextraktionsmodul (931), das konfiguriert ist zum Extrahieren von Merkmalinformationen im Bild;
ein Merkmaltemplatenerfassungsmodul (932), das konfiguriert ist zum Erfassen eines voreingestellten Bildschirmmerkmaltemplates des mobilen Endgeräts;
ein Übereinstimmungsbeurteilungsmodul (933), das konfiguriert ist zum Beurteilen, ob die Merkmalinformationen mit dem voreingestellten Bildschirmmerkmaltemplate übereinstimmen;
ein erstes Bildschirmmerkmalbestimmungsmodul (934), das konfiguriert ist zum Bestimmen, dass das Bild das Bildschirmmerkmal des mobilen Endgeräts enthält, wenn die Merkmalinformationen mit dem voreingestellten Bildschirmmerkmaltemplate übereinstimmen; und
ein zweites Bildschirmmerkmalbestimmungsmodul (935), das konfiguriert ist zum Bestimmen, dass das Bild das Bildschirmmerkmal des mobilen Endgeräts nicht enthält, wenn die Merkmalinformationen mit dem voreingestellten Bildschirmmerkmaltemplate nicht übereinstimmen.

13. Computerprogramm, enthaltend Anweisungen zum Ausführen der Schritte eines Bildschirmsteuerungsverfahrens nach einem der Ansprüche 1 bis 4 , wenn das Programm durch einen Computer ausgeführt wird.

## Revendications

1. Procédé de commande d'un écran d'un terminal mobile (100) comprenant :
la détection d'une direction de déplacement du terminal mobile (100) ;
la détection d'une orientation de l'écran de terminal mobile ; et
la réception d'informations de reconnaissance de posture envoyées par un dispositif portable intelligent (300), les informations de reconnaissance de posture comprenant une orientation vers la paume d'un utilisateur en utilisant le dispositif intelligent portable (300) dans lequel le procédé comprend :
l'envoi d'une instruction de reconnaissance d'écran à des lunettes intelligentes (200) lorsque la totalité de la direction de déplacement, de l'orientation de l'écran et d'une orientation vers la paume dans les informations de reconnaissance de posture se trouve dans une première direction et la mise sous tension de l'écran de terminal mobile lorsque des informations de succès de reconnaissance d'écran envoyées par les lunettes intelligentes sont reçues par le terminal mobile (100) ; et
la mise hors tension de l'écran de terminal mobile lorsque la totalité de la direction de déplacement, de l'orientation de l'écran et de l'orientation vers la paume dans les informations de reconnaissance de posture se trouve dans une seconde direction, dans lequel la première direction est une direction ascendante et la seconde direction est une direction descendante.

2. Procédé selon la revendication 1, dans lequel la détection de la direction de déplacement du terminal mobile comprend :
l'acquisition d'une valeur de gravité de l'axe Z détectée par un capteur de gravité dans le terminal mobile ;
la détermination du fait que la direction de déplacement du terminal mobile est la première direction lorsque la valeur de gravité de l'axe Z est supérieure à un premier seuil préétabli ; et
la détermination du fait que la direction de déplacement du terminal mobile est la seconde direction lorsque la valeur de gravité de l'axe Z est plus petite qu'un second seuil préétabli, le premier seuil préétabli étant supérieur au second seuil préétabli.

3. Procédé selon la revendication 1, dans lequel la détection de l'orientation de l'écran de terminal mobile comprend :
l'acquisition de données de l'axe Z recueillies par le capteur de gravité dans le terminal mobile ;
la détermination du fait que l'orientation de l'écran de terminal mobile se trouve dans la première direction lorsque les données de l'axe Z sont une valeur positive ; et
la détermination du fait que l'orientation de l'écran de terminal mobile se trouve dans la seconde direction lorsque les données de l'axe Z sont une valeur négative.

4. Procédé selon la revendication 1, dans lequel l'étape de mise sous tension de l'écran de terminal mobile lorsque les informations de succès de reconnaissance d'écran envoyées par les lunettes intelligentes sont reçues comprend en outre :
la détection d'un état de l'écran de terminal mobile lorsque des informations de succès de reconnaissance d'écran envoyées par les lunettes intelligentes sont reçues ;
la réalisation de l'étape de mise sous tension de l'écran de terminal mobile lorsque l'écran de terminal mobile est dans l'état d'arrêt ; et
l'étape de mise hors tension de l'écran de terminal mobile lorsque la totalité de la direction de déplacement, de l'orientation de l'écran et de l'orientation vers la paume dans les informations de reconnaissance de posture se trouve dans la seconde direction comprend en outre :
la détection d'un état de l'écran de terminal mobile lorsque la totalité de la direction de déplacement, de l'orientation de l'écran et de l'orientation vers la paume dans les informations de reconnaissance de posture se trouve dans une seconde direction ;
la réalisation de l'étape de mise hors tension de l'écran de terminal mobile lorsque l'écran de terminal mobile est dans l'état de marche.

5. Procédé selon la revendication 1, comprenant en outre :
le démarrage d'une opération de reconnaissance d'écran lorsqu'une instruction de reconnaissance d'écran envoyée par un terminal mobile est reçue ;
l'acquisition d'une image dans une plage de champ visuel des lunettes intelligentes ; et
le jugement pour savoir si l'image contient une caractéristique d'écran du terminal mobile et la détection du fait que les globes oculaires de l'utilisateur regardent le terminal mobile ;
la génération d'informations de succès de reconnaissance d'écran lorsque l'image contient la caractéristique d'écran du terminal mobile et que les globes oculaires de l'utilisateur regardent le terminal mobile ; et
l'envoi des informations de succès de reconnaissance d'écran au terminal mobile de sorte que le terminal mobile éclaire l'écran du terminal mobile.

6. Procédé selon la revendication 5, dans lequel le jugement quant à savoir si l'image contient la caractéristique d'écran du terminal mobile comprend :
l'extraction d'informations caractéristiques dans l'image ;
l'acquisition d'un modèle caractéristique d'écran préétabli du terminal mobile ;
le jugement quant à savoir si les informations caractéristiques concordent avec le modèle caractéristique d'écran préétabli ;
la détermination du fait que l'image contient la caractéristique d'écran du terminal mobile lorsque les informations caractéristiques concordent avec le modèle de caractéristique d'écran préétabli ; et
la détermination du fait que l'image ne contient pas la caractéristique d'écran du terminal mobile lorsque les informations caractéristiques ne concordent pas avec le modèle caractéristique d'écran préétabli.

7. Dispositif de commande d'un écran d'un terminal mobile (100), comprenant :
une unité de détection de direction de déplacement (10) configurée pour détecter une direction de déplacement du terminal mobile (100) ;
une unité de détection d'orientation d'écran (20) configurée pour détecter une orientation de l'écran de terminal mobile ; et
une unité de réception d'informations (30) configurée pour recevoir des informations de reconnaissance de posture envoyées par un dispositif intelligent portable (300),
les informations de reconnaissance de posture comprenant une orientation vers la paume d'un utilisateur utilisant le dispositif intelligent portable ;
une unité d'envoi d'instructions (40) configurée pour envoyer une instruction de reconnaissance d'écran à des lunettes intelligentes lorsque la totalité de la direction de déplacement, de l'orientation de l'écran et d'une orientation vers la paume dans les informations de reconnaissance de posture se trouve dans une première direction ;
une unité de mise sous tension d'écran (50) configurée pour mettre sous tension l'écran de terminal mobile lorsque des informations de succès de reconnaissance d'écran envoyées par les lunettes intelligentes (200) sont reçues ; et
une unité de mise hors tension d'écran (60) configurée pour arrêter l'écran du terminal mobile lorsque la totalité de la direction de déplacement, de l'orientation de l'écran et de l'orientation vers la paume dans les informations de reconnaissance de posture se trouve dans une seconde direction, dans lequel la première direction est une direction ascendante et la seconde direction est une direction descendante.

8. Dispositif selon la revendication 7, dans lequel l'unité de détection de direction de déplacement comprend :
un module d'acquisition de valeur de gravité (11) configuré pour acquérir une valeur de gravité de l'axe Z détectée par un capteur de gravité dans le terminal mobile ;
un premier module de détermination de direction de déplacement (12) configuré pour déterminer que la direction de déplacement du terminal mobile est la première direction préétablie lorsque la valeur de gravité de l'axe Z est supérieure à un premier seuil préétabli ; et
un second module de détermination de direction de déplacement (13) configuré pour déterminer que la direction de déplacement du terminal mobile est la seconde direction lorsque la valeur de gravité de l'axe Z est plus petite qu'un second seuil préétabli, le premier seuil préétabli étant supérieur au second seuil préétabli.

9. Dispositif selon la revendication 7, dans lequel l'unité de détection d'orientation d'écran comprend :
un module d'acquisition de données (21) configuré pour acquérir des données de l'axe Z recueillies par le capteur de gravité dans le terminal mobile ;
un premier module de détermination d'orientation d'écran (22) configuré pour déterminer que l'orientation de l'écran du terminal mobile est dans la première direction lorsque les données de l'axe Z sont une valeur positive ; et
un second module de détermination d'orientation d'écran (23) configuré pour déterminer que l'orientation de l'écran du terminal mobile est dans la seconde direction lorsque les données de l'axe Z sont une valeur négative.

10. Procédé selon la revendication 7, dans lequel le dispositif comprend en outre :
une unité de détection d'état d'écran (70) configurée pour détecter un état de l'écran de terminal mobile lorsque des informations de succès de reconnaissance d'écran envoyées par les lunettes intelligentes sont reçues et que la totalité de la direction de déplacement, de l'orientation de l'écran et de l'orientation vers la paume dans les informations de reconnaissance de posture se trouve dans une seconde direction ;
une unité de mise sous tension d'écran configurée pour mettre sous tension l'écran de terminal mobile lorsque l'écran de terminal mobile est dans l'état d'arrêt ; et
une unité de mise hors tension de l'écran configurée pour mettre hors tension l'écran de terminal mobile lorsque l'écran de terminal mobile est dans l'état de marche.

11. Système comprenant le dispositif de la revendication 7 et lesdites lunettes intelligentes, lesdites lunettes intelligentes comprenant en outre :
une unité de démarrage (910) configurée pour démarrer une opération de reconnaissance d'écran lorsqu'une instruction de reconnaissance d'écran envoyée par un terminal mobile est reçue ;
une unité d'acquisition d'images (920) configurée pour acquérir une image dans une plage de champ visuel des lunettes intelligentes ;
une unité de jugement (930) configurée pour juger si l'image contient ou non une caractéristique d'écran du terminal mobile et la détection du fait que les globes oculaires de l'utilisateur regardent ou non le terminal mobile ;
une unité de génération d'informations (940) configurée pour générer des informations de succès de reconnaissance d'écran lorsque l'image contient la caractéristique d'écran du terminal mobile et que les globes oculaires de l'utilisateur regardent le terminal mobile ; et
une unité d'envoi d'informations (950) configurée pour envoyer les informations de succès de reconnaissance d'écran au terminal mobile de sorte que le terminal mobile allume l'écran du terminal mobile.

12. Système selon la revendication 11, dans lequel l'unité de jugement comprend en outre :
un module d'extraction d'informations caractéristiques (931) configuré pour extraire des informations caractéristiques dans l'image ;
un module d'acquisition de modèle caractéristique (932) configuré pour acquérir un modèle caractéristique d'écran préétabli du terminal mobile ;
un module de jugement de concordance (933) configuré pour juger si les informations caractéristiques concordent ou non avec le modèle caractéristique d'écran préétabli ;
un premier module de détermination de caractéristiques d'écran (934) configuré pour déterminer que l'image contient la caractéristique d'écran du terminal mobile lorsque les informations caractéristiques concordent avec le modèle caractéristique d'écran préétabli ; et
un second module de détermination de caractéristiques d'écran (935) configuré pour déterminer que l'image ne contient pas la caractéristique d'écran du terminal mobile lorsque les informations caractéristiques ne concordent pas avec le modèle caractéristique d'écran préétabli.

13. Programme d'ordinateur comprenant des instructions pour exécuter les étapes d'un procédé de commande d'écran selon l'une quelconque des revendications 1 à 4 lorsque ledit programme est exécuté par un ordinateur.
